# EUROPEAN PATENT APPLICATION

(11) **EP 3 048 496 A1**
(43) Date of publication of application: **27.07.2016**
(21) Application number: 15151938.6
(22) Date of filing: 21.01.2015
(51) Int. Cl.: G05B 19/042

(54) **Control device, especially for a motor vehicle**

(71) Applicant: MAHLE International GmbH, 70376 Stuttgart (DE)
(72) Inventor: Gries, Jean-Philippe, 68000 Colmar (FR)
(74) Representative: Grauel, Andreas

(57) **Abstract**

The invention relates to a control device (1), especially for a motor vehicle, to control a load (13, 14, 15 and 18), comprising a control unit (3, 19) and at least one interface unit (7). A control device which allows simplified development and mounting is characterized by separate modular structures of said control unit (3, 19) and said interface unit (7), which are connected by a communication line (2).

## Description

### Technical area

The invention refers to control device, especially for a motor vehicle, in accordance with preamble of claim 1.

### State of the art

The document EP 1 580 050 B1 discloses an electric auxiliary heating unit for a motor vehicle, having a heating block, through which an airflow might be directed. The heating block of the auxiliary heating unit is disposed in a flow channel of an air-conditioning housing and an electronic control device of the heating unit is disposed outside the flow channel at the housing wall of the air-conditioning housing and outside of the air conditioning housing. An interface element is located in an airtight manner, which electrically connects the heating block to the control device without allowing an air flow through the housing at the location of the interface element. Such an arrangement is designed for a very special application in a motor vehicle which is specified by the vehicle manufacturer.

Different requirements are often submitted for different electronic devices like engine control unit or relay boxes in a motor vehicle. Such requirements consist in the type of the electronic control unit and/or the type of power and /or signal connector or integration of engine control unit and relay unit. That is way new developments are often required at each new product.

### Embodiment of invention, problem, solution, advantages

The problem addressed in this invention is to indicate a control device, especially for a motor vehicle, with allows a simplified development, manufacture and/or mounting of the control device.

This is achieved by a control device with the features of claim 1.

An embodiment of the invention relates to separate modular structures of said control unit and of said interface unit, which are connected by a communication line. Due to the modular structure of especially every part of control device using the same module per functionality it is permitted to change quickly the functionality from one product to another product. A more easy development of robust modules adapted to different types of engine control units and relay units is possible. The Concept can be used in standard networks like 12 V- or 24V- vehicles as well as on hybrid or electrical vehicles including e.g. high-voltage power units.

According to another aspect of an embodiment of the invention a power module is linked with said module of the control unit, the so called control unit module, said interface unit module and said load. Hence, reusing of power module for different products is possible.

In addition, a transceiver module is arranged between a signal module interface and said control unit module and it is linked by the communication line. The control device can be combined with different examples of separate modules with regard to a special requirement of a special customer. The costs of manufacturing and mounting of the control device are reduced because of the fact that separate modules are assembled by well-known technologies like clinching, bonding, clipping, soldering, ultrasonic welding or cabling.

Furthermore, said modular power module is designed as a power switch module or a power interface module. Therefore different techniques are used in the respective modules.

According to another aspect of an embodiment of the invention said communication line is designed as a communication line of a data bus system like a CAN- or LIN-bus configuration system. Therefore the communication via the communication line may be done by way of a well described communication protocol.

In addition, said control unit module is preferably designed as an electronic control unit or a relay unit. Therefore, electronic devices as well as electric devices can be built with same modular units. Hence, the plurality of possible control devices is increasing.

Furthermore, said electronic control unit comprises a microcontroller and/or at least one sensor unit. Therefore calculation of data and/or measuring of the system state might be included in the module.

Further advantageous embodiments are described in the following description of figures and in the subclaims.

### Short description of drawings

Hereafter the invention is described in more detail based on at least one embodiment shown in the following drawings. It shows:
- Fig. 1: a first embodiment of a control device according of the invention,
- Fig. 2: a further embodiment of a control device according to the invention,
- Fig. 3: another embodiment of a control device according to the invention,
- Fig. 4: a further embodiment of a control device according to the invention,
- Fig. 5: a further embodiment of a control device according to the invention, and
- Fig. 6: a further embodiment of a control device according to the invention.

### Preferred embodiment of the invention

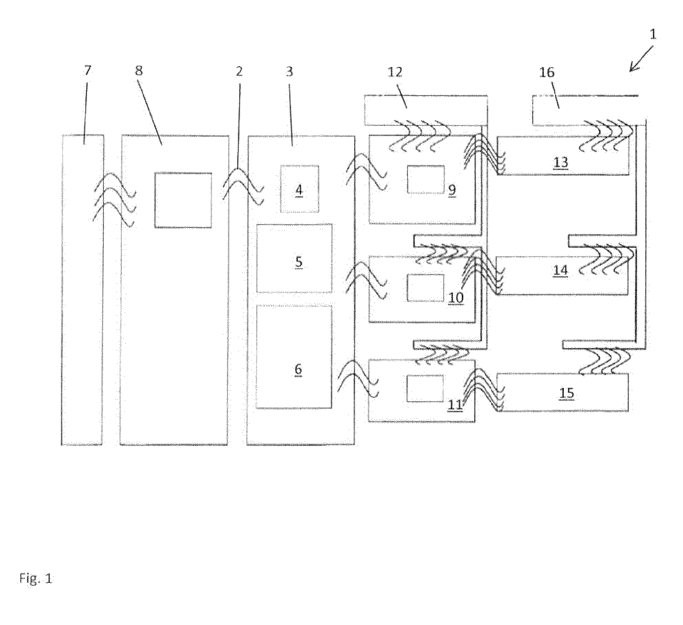

Figure 1 shows a first embodiment of a control device 1 according to the idea of the invention. The control device 1 consists of different modules which are interconnected by communication line 2, e.g. a bus system, i.e. a CAN-bus system or a LIN-bus system. The central unit of said control device 1 is a control unit module 3 comprising a microcontroller 4, a temperature measurement unit 5 and optionally a further measurement unit 6. Signal input is made by a signal module interface 7 connected to a transceiver module 8 which is linked to control unit module 3. The control unit module 3 is connected to three output stage modules 9, 10, 11 arranged in a first power module 12. Every output stage module 9, 10, 11 controls one of three loads 13, 14 and 15 which are designed as electric heaters. The loads 13, 14, 15 are positioned in a second power module 16. Thus the loads as electric heaters are preferably designed as heater units using PTC-heater elements. The communication line connects especially the modules 7 and 8.

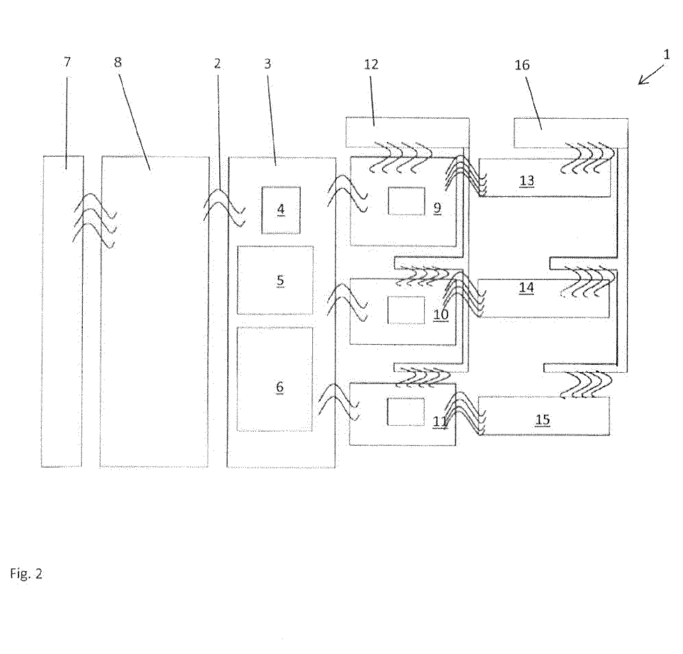

Another embodiment of the inventive concept is depicted in Figure 2. The control device 1 works in a PWM-mode configuration. The difference to the control device according to Figure 1 consists in the absence of a transceiver component. In this case the transceiver module 8 is a black box unit, which is bridged by the bus system 2.

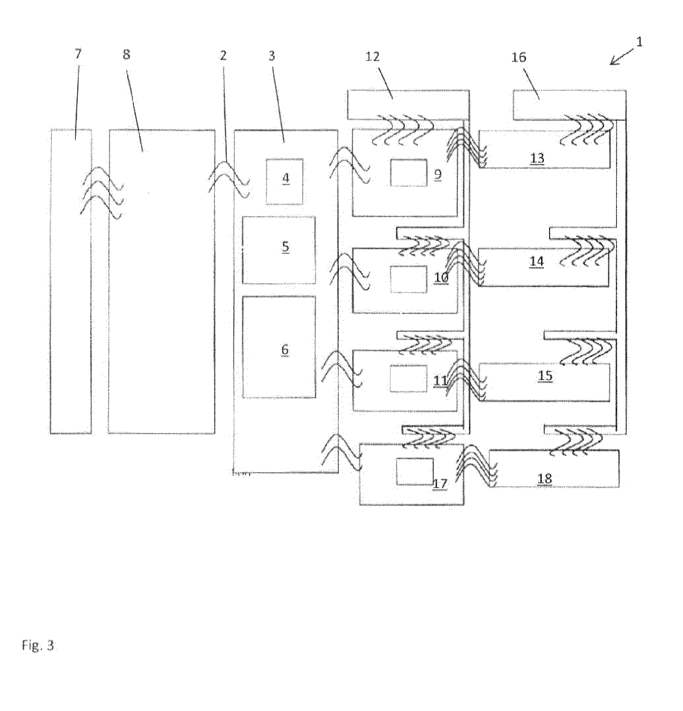

In Figure 3 a further embodiment of the invention is shown. The control device 1 differs from Figure 2 in using four output stage modules 9, 10, 11, 17 wherein every output stage module 9, 10, 11, 17 controls one of four loads 13, 14, 15, 18, which are in this embodiment designed as electrical heaters, e.g. PTC heaters. The four output stage modules 9, 10, 11, 17 are arranged in or designed as the first power module 12 and the four loads 13, 14, 15, 18 are positioned in or designed as the second power module 16.

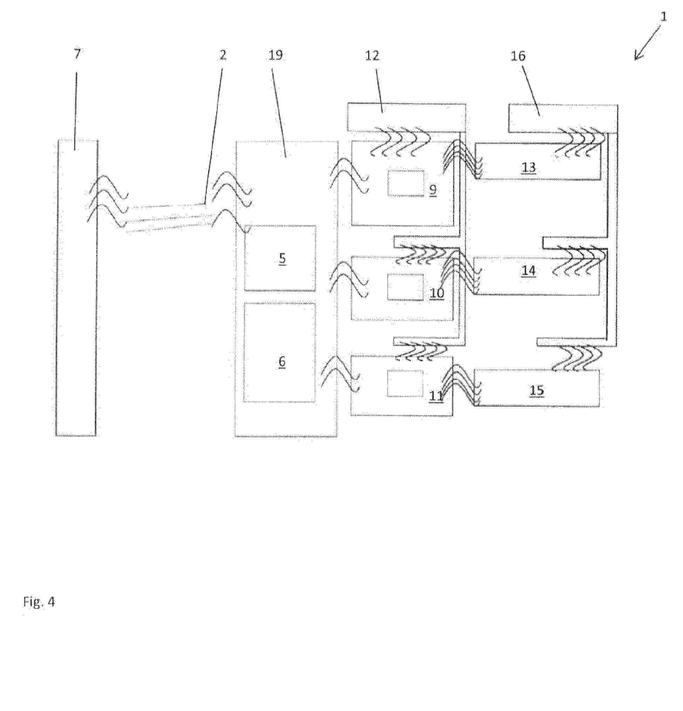

Figure 4 shows a control device 1 which comprises an electronic unit 19 without a microcontroller but which includes the temperature measurement unit 5 and the other measurement unit 6. The three stages of loads 13, 14, 15 which are provided as PTC-heaters are commanded by said electronic unit 19 controlled by an ON/OFF-signal of the signal module interface 7. The control may even be done by way of a PWM-signal instead of an ON/OFF-signal.

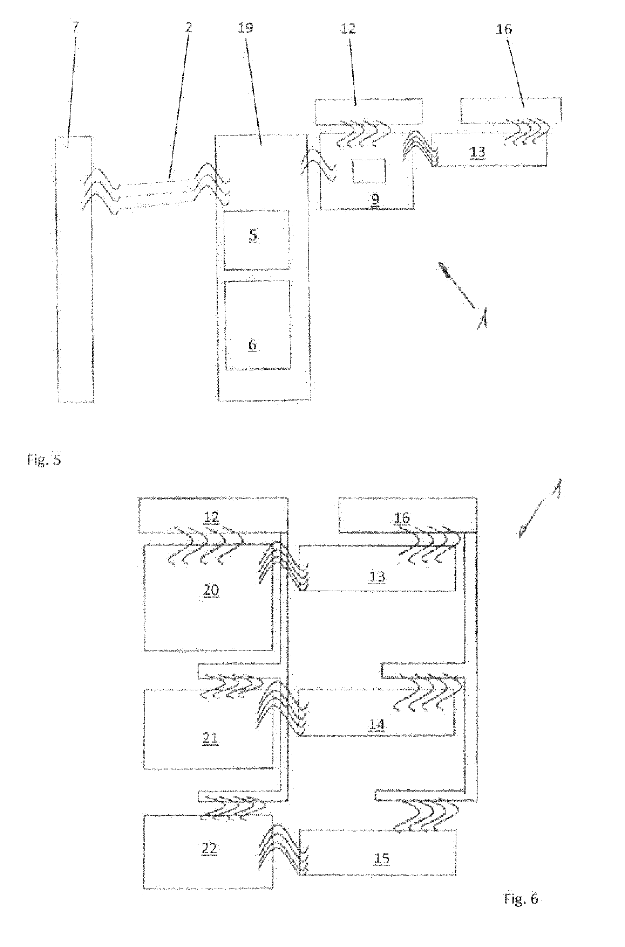

A further embodiment of the invention is depicted in Figure 5. The control device 1 comprises an output stage module 9 with one stage controlling one load 13. The Output stage module 9 and the load 13 are both connected with one power module 12 or 16 respectively. The signal module interface 7 controls the electronic unit 19 by an ON/OFF signal. The control may even be done by way of a PWM-signal instead of an ON/OFF-signal.

A shown relay unit comprises three parts 20, 21 and 22 in order to command three stages of a load 13, 14, 15, which is designed as an PTC heater as depicted in Figure 6. The relay unit including the parts 20, 21, 22 is arranged in the first power module 12 or designed as such and the respective loads 13, 14, 15 are positioned in or arranged as the second power module 16.

## Claims

1. Control device (1), especially for a motor vehicle, to control a load (13, 14, 15, 19) comprising
- an control unit (3, 19) and
- at least one interface unit (7), the control device is **characterized in that**
separate modular structures of said control unit (3, 19) and said interface unit (7) are provided, whereas the control unit and the interface unit are connected by a communication line (2).

2. Control device (1) according to claim 1, **characterized by** a power module (12, 16) linked with said control unit module (3, 19), said interface unit module (7) and said load (13, 14, 15, 18).

3. Control device according to claim 1 or 2, **characterized by** a transceiver module (8) ranged between a signal module interface (7) and said control unit module (3, 19) and linked to the signal module interface (7) and to the control unit module (3, 19) by the communication line (2).

4. Control device according at least one of previous claims, **characterized in that** the modular power module (12, 16) is a power switch module or a power interface module.

5. Control device according at least one of preceding claims, **characterized in that** the communication line (2) is a bus system connection, especially a CAN-bus or LIN-bus configuration or the like.

6. Control device according at least one of previous claims, **characterized in that** said control unit module (3, 19) is designed as an electronic control unit (3) or a relay unit (20, 21, and 22).

7. Control device according to claim 6, **characterized in that** said electronic control unit (3) comprising a microcontroller (4) and/or at least one sensor unit (5, 6).
